# EUROPÄISCHE PATENTSCHRIFT

(11) **EP 1 815 934 B1**
(45) Veröffentlichungstag und Bekanntmachung des Hinweises auf die Patenterteilung: **03.08.2011**
(21) Anmeldenummer: 07002479.9
(22) Anmeldetag: 06.02.2007
(51) Int. Cl.: B23K 1/00, B23K 1/08, B23K 1/20, F28D 9/00, F28F 3/08, B23K 101/14

(54) **Verfahren zur Herstellung eines aus einem Schichtblock bestehenden Schichtwärmeübertragers durch Aufbringen einer definierten Druckkraft auf entgegengesetzten Seiten des Schichtblockes**
Method for manufacturing a layer structured heat exchanger comprising a layered block with Application of a defined compressive force on this layered block
Procédé de fabrication d'un échangeur de chaleur à structure en couches comprenant un block multicouche avec application d'une force de compression définie sur ce bloc multicouche

(30) Priorität: 06.02.2006 DE 102006005570
(43) Veröffentlichungstag der Anmeldung: 08.08.2007
(73) Patentinhaber: Behr GmbH & Co. KG, 70469 Stuttgart (DE)
(72) Erfinder: Angermann, Hans-Heinrich, 70197 Stuttgart (DE)

(56) Entgegenhaltungen:
- EP-A- 1 376 041
- DE-A1- 10 042 690
- DE-A1- 19 823 000
- DE-A1-102004 041 309
- GB-A- 567 286
- US-A- 4 133 559
- US-A- 4 297 775
- US-A1- 2003 077 474
- US-A1- 2004 169 065

## Beschreibung

Die Erfindung betrifft ein Verfahren zur Herstellung eines gelöteten und geschweißten Schichtwärmeübertragers nach dem Oberbegriff des Patentanspruches 1 (siehe, z.B., EP 1 376 041 A).

Schichtwärmeübertrager und Verfahren zu deren Herstellung wurden durch die DE 102 28 274 A1 der Anmelderin bekannt. Der Schichtwärmeübertrager besteht im Wesentlichen aus einem Schichtblock, welcher aus aufeinander gestapelten Trennplatten und abschließenden Deckplatten zusammengesetzt ist, sowie aus an den Schichtblock ansetzbaren Sammelkästen. Bei dem bekannten Verfahren zur Herstellung eines solchen Schichtwärmeübertragers wird zunächst der Schichtblock gestapelt, d. h. die Trenn- und Deckbleche werden "kassettiert". Während oder bereits vor dem "Kassettieren" wird Lot auf oder zwischen den Trennblechen deponiert, beispielsweise durch Einlegen von festen Lotfolien. Danach wird der Stapel bzw. Schichtblock mechanisch fixiert, was durch das Legen von Schweißnähten an den Kanten des Schichtblockes oder auch durch das Anschweißen der Sammelkästen erfolgt. Nach dem Schweißvorgang erfolgt der Lötprozess, wobei der gesamte Schichtwärmeübertrager, bestehend aus Schichtblock und Sammelkästen, in einen Lötofen verbracht wird. Das Löten verbindet einerseits die Trenn- und Deckplatten zu einem festen Block und dichtet andererseits die Schweißnähte an den Sammelkästen ab. Problematisch bei dem bekannten Herstellverfahren ist, dass beim Schweißen gleichzeitig Lot mit aufgeschmolzen wird und in die Schweißnaht eindringt, was zu Heißrissen in der Schweißnaht oder sonstigen Festigkeitsminderungen führen kann.

In der älteren Anmeldung der Anmelderin mit dem amtlichen Aktenzeichen 10 2004 041 309.6 ist ein lötbarer und schweißbarer Schichtwärmeübertrager beschrieben, welcher nach einem ähnlichen Verfahren hergestellt wird, jedoch unter Verwendung von sehr dünnen Lotschichten, d. h. im Bereich von 1 bis 25 µm Dicke. Zwar erfolgt die Belotung der Schichtbleche auch hier vor dem Schweißen, jedoch ist der schädliche Einfluss des mit dem Schweißen aufgeschmolzenen Lotes auf die Qualität der Schweißnaht insofern geringer, als geringere Lotmengen vorhanden sind. Dennoch kann es auch bei dünnen Lotschichten, insbesondere bei Nickellot zu Heißrissen in der Schweißnaht kommen.

In der weiteren älteren Patentanmeldung der Anmelderin mit dem amtlichen Aktenzeichen 10 2005 043 733.8 wird ein Verfahren zur Herstellung eines Schichtwärmeübertragers beschrieben, wobei ebenfalls vor dem mechanischen Fixieren des Schichtblockes durch Schweißen Lot zwischen den Trennplatten deponiert wird, und zwar in Form von Lotfolien, weiche in den Eckbereichen, wo Schweißnähte gelegt werden, ausgespart sind. Damit wird erreicht, dass während des Schweißvorganges kein Lot aufgeschmolzen wird und in die Schweißnaht läuft, was dort zu Heißrissen führen könnte. Die Qualität der Schweißnaht wird somit verbessert. Allerdings ist der spezielle Zuschnitt der Lotfolien mit zusätzlichen Kosten verbunden. Außerdem sind Lotfolien relativ teures Lotmaterial.

Durch die EP 1 073 537 B1 wurde ein Verfahren zur Herstellung einer Rohr/Boden-Verbindung für einen Abgaswärmeübertrager durch Löten bekannt. Dabei werden die Rohrenden in Öffnungen von Rohrböden eingelötet, wobei eine weiche, biegsame Lotfolie stirnseitig auf die Rohrböden aufgelegt wird. Während des Lötprozesses schmilzt die Lotfolie, und flüssiges Lot dringt in die Spalte zwischen Rohren und Öffnungen im Rohrboden ein. Die Spaltweite, die maßgebend für die Qualität der Lötung, insbesondere der Dichtlötung, ist, kann hierbei nur über die Fertigungstoleranzen von Rohren und Rohrböden beeinflusst werden, d. h. minimale Spaltweiten sind nur mit einem erheblichen fertigungstechnischen Aufwand zu erzielen. Die Verwendung von Lotfolien ist wiederum kostentreibend.

Es ist Aufgabe der vorliegenden Erfindung, ein Verfahren der eingangs genannten Art weiter zu verbessern, insbesondere dahingehend, dass eine erhöhte Qualität der Schweißnähte erreichbar ist. Dabei soll ein kostengünstiges Lotmaterial verwendet werden.

Diese Aufgabe wird durch die Merkmale des Patentanspruches 1 gelöst. Erfindungsgemäß ist vorgesehen, dass Trenn- und abschließende Deckbleche zunächst unbelotet gestapelt und anschließend durch Aufbringung einer definierten Druckkraft vorgespannt werden. In Abhängigkeit von der Höhe der Druckkraft wird eine recht gut definierte Spaltbreite für die Lotspalte zwischen den Trennblechen erzielt. Anschließend wird diese Vorspannung konserviert, indem Schweißnähte am Schichtblock gelegt werden, welche quasi als Zuganker zwischen den mit einer größeren Materialdicke versehenen Deckplatten wirken. Damit ergibt sich eine gleichmäßige Vorspannung im Schichtblock. Anschließend, d. h. nach dem Schweißen wird das Lot gemäß der Erfindung stirnseitig des Schichtblockes deponiert, wobei verschiedene Verfahren möglich sind, um das Lot von außen nach innen in den Schichtblock und in die einzelnen Lotspalte zu bringen, falls dies gewünscht ist. Nachdem das Lot auf geeignete Weise deponiert worden ist, erfolgt das Löten des Schichtblockes, so dass die konturierten Trennbleche durchgehend verlötet sind und damit der Wärmeübertrager die erforderliche Innendruckfestigkeit und Dichtigkeit aufweist. Aufgrund der erfindungsgemäßen Belotung, welche nach dem Schweißvorgang erfolgt, ergibt sich der Vorteil, dass während des Schweißvorganges kein Lot in die Schweißnaht eindringen und dort zu Heißrissen führen kann. Die Schweißnaht bleibt somit absolut frei von Lotbeimengungen. Darüber hinaus ergibt sich der Vorteil, dass durch das Aufbringen einer definierten Druckkraft und einer definierten Vorspannung im Schichtblock definierte minimale Spaltbreiten, d. h. Lötspalte erreicht werden, welche die Voraussetzung für eine einwandfreie Lötverbindung sind. Außerdem kann Lot in Form von kostengünstiger Lotpaste verwendet werden.

Alternativ kann die Belotung auch nach dem Spannen des Schichtblockes und vor dem Anbringen der Schweißnähte erfolgen.

Vorteilhafte Ausgestaltungen der Erfindung ergeben sich aus den Unteransprüchen. So kann das Konservieren der Vorspannung durch Aufschweißen der Sammelkästen erfolgen, welche in diesem Falle als verlorene Lötvorrichtungen fungieren. Damit wird ein zusätzlicher Schweißvorgang - für das Fixieren - eingespart.

Nach einer vorteilhaften Ausgestaltung der Erfindung weist die Kraft zur Erzeugung der Vorspannung einen definierten Betrag, vorzugsweise 10 KN auf, welcher in Abhängigkeit von der vorhandenen Pressfläche (Summe sämtlicher Flächen, die von einer Deckplatte zur anderen durchgehend, d. h. ohne Spalt, ausgebildet sind) zu einer bestimmten Flächenpressung führt. Bei einer beispielhaften Pressfläche von 72 Quadratmillimeter ergibt sich damit eine Flächenpressung (Vorspannung) von 139 N/mm². Hierbei sind Abweichungen nach oben und unten im Bereich von Zehnerpotenzen möglich. Die definierte Flächenpressung und ihre anschließende Konservierung führt zu minimalen Lotspalten, die praktisch gesehen gleich Null sind, tatsächlich sind die Spalte infolge der Mikrorauhigkeit der Trennbleche jedoch größer als Null. Ein minimaler Spalt bewirkt eine hohe Kapillarwirkung, eine vollständige Füllung des Lotspaltes und somit eine optimale Lötnaht, die einerseits die notwendige Festigkeit, keine Ausscheidungsphasen in der Lötnaht und andererseits auch die erforderliche Dichtheit des Wärmeübertragers ergibt.

In weiterer vorteilhafter Ausgestaltung der Erfindung wird das Lot als Lotpaste aufgebracht, wobei es auf die Stirnseite des Schichtblockes gemäß der Erfindung aufgesprüht oder aufdosiert werden kann. Infolge der Kapillarwirkung benetzt das Lot während des Lötprozesses die Gesamtheit der Lotspalte von außen bis nach innen. Die stirnseitig aufgebrachte Lotpaste kann mittels Druckluft weiter verteilt und in die Kanäle befördert werden.

Nach einer vorteilhaften Ausgestaltung der Erfindung wird beim Legen der Schweißnähte kein Kasten, sondern zunächst nur ein Rahmen aufgeschweißt. Die Vorteile sind, dass das Lot optimal stirnseitig deponiert werden kann, d. h. auch die Ecken der Stirnseite des Schichtblockes sind gut mit Lötpaste belegt, und dass bei Durch- und Einblasen mit Druckluft jeder Kanal gut beaufschlagbar ist. Ein weiterer Vorteil ist, dass ein Schichtblock, der außen einen Rahmen aufweist, mit bekannter Technik katalytisch beschichtet werden kann, da die Schichtbleche gut zugänglich sind. Nach dem Beloten können die Kästen aufgeschweißt werden. Alternativ kann zunächst auch gelötet und dann die Anschlusskästen aufgeschweißt werden.

Nach einer weiteren vorteilhaften Ausgestaltung der Erfindung kommt eine Lotpaste zur Anwendung, die in zwei Komponenten, nämlich als flüssiger Binder und trockenes Lotpulver vorliegt. Die Belotung erfolgt dann in der Weise, dass zunächst die Oberfläche des Schichtblockes mit dem flüssigen Binder benetzt wird und dass anschließend das Lotpulver über den klebrigen Binder geblasen oder gerieselt wird. Damit wird ebenfalls eine fein dosierte Belotung von außen nach innen erreicht, so dass beim Lötprozess ein hinreichendes Lotangebot für die Benetzung der Lotspalte vorliegt.

In weiterer vorteilhafter Ausgestaltung der Erfindung wird das Lot zunächst in pastöser bzw. flüssiger Form durch die Kanäle des Schichtblockes gepumpt, und anschließend wird überschüssiges Lot durch Ausblasen entfernt.

Die Viskosität der Lotpaste kann natürlich durch Vermischung der Paste eingestellt werden oder auch dadurch, dass die Lotpaste auf eine geeignete Temperatur gebracht wird, z. B. 80 Grad Celsius. Alternativ oder gleichzeitig kann auch das Bauteil ganz oder teilweise auf eine definierte Temperatur eingestellt werden.

In weiterer vorteilhafter Ausgestaltung der Erfindung kann das Lot auch durch chemische Beschichtung aufgebracht werden, insbesondere in Form von NiP, NiCrP oder NiB-Schichten. Vorzugsweise wird der Schichtblock zum Zwecke der Beschichtung in eine Beschichtungslösung eingelegt, wodurch die Beschichtung erfolgt. Alternativ erfolgt die chemische Beschichtung vorteilhaft dadurch, dass die Beschichtungslösung durch den Schichtblock hindurch gepumpt wird. Dies hat vor allem den Vorteil, dass die Sammelkästen nicht mit der Beschichtungslösung in Kontakt kommen und damit Beschichtungen auf den Sammelkästen vermieden werden, was beim späteren Anschweißen von Verbindungsrohren nachteilig sein könnte.

Ausführungsbeispiele der Erfindung sind in der Zeichnung dargestellt und werden im Folgenden näher beschrieben. Es zeigen
- Fig. 1: einen Schichtwärmeübertrager in Explosivdarstellung,
- Fig. 2: einen Schichtblock mit aufgeschweißten Rahmen,
- Fig. 3: ein einzelnes, teilweise dargestelltes konturiertes Trennblech,
- Fig. 4a, 4b: Ausschnitte zweier Stirnseiten eines Schichtblockes und
- Fig. 5: ein weiteres Ausführungsbeispiel für ein Trennblech.

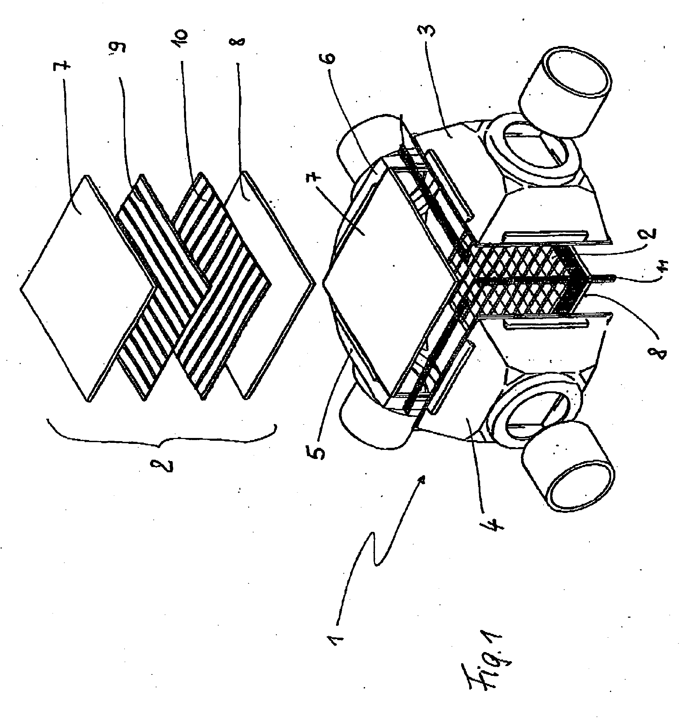

**Fig. 1** zeigt einen Schichtwärmeübertrager 1 mit seinen einzelnen Komponenten in Explosivdarstellung. Wie aus dem eingangs genannten Stand der Technik bekannt, besteht der Schichtwärmeübertrager 1 einerseits aus einem etwa würfel- oder quaderförmig ausgebildeten Schichtblock 2, welcher durch vier Stirnflächen und zwei Deckflächen begrenzt wird. An die vier Stirnflächen werden Sammelkästen 3, 4, 5, 6 angesetzt, welche der Zu- und Abfuhr eines ersten und eines zweiten Wärmetauschermediums dienen. Die Deckflächen werden durch Deckplatten 7, 8 abgeschlossen. Der Schichtblock 2, ist oberhalb des Schichtwärmeübertragers 1 in Explosivdarstellung als Stapel dargestellt, welcher aus konturierten Trennplatten 9, 10 sowie aus den beiden Deckplatten 7, 8 besteht. In der Zeichnung sind lediglich zwei Trennplatten 9, 10 mit unterschiedlich ausgerichteter Konturierung (Stege und Kanäle) dargestellt - tatsächlich weist der Stapel 2 natürlich eine Vielzahl von Trennplatten auf. Hervorzuheben - insbesondere in Hinblick auf den eingangs zitierten Stand der Technik - ist, dass der Stapel 2 keine Lotfolien aufweist und dass auf den Trennplatten 9, 10 oder den Deckplatten 7, 8 auch keine Lotbeschichtungen aufgebracht sind. Die Trenn- und Deckplatten 7, 8, 9, 10 des Stapels 2 sind somit unbelotet.

Das erfindungsgemäße Verfahren zur Herstellung des Schichtwärmeübertragers 1 läuft etwa wie folgt ab: Zunächst wird der Stapel 2, bestehend aus unbeloteten Deck- und Trennplatten 7, 8, 9, 10 erstellt - man nennt dies auch Kassettieren. Der Stapel wird dann in einem zweiten Verfahrensschritt mit einer Druckkraft definierter Größe beaufschlagt, welche auf die obere und die untere Deckplatte 7, 8 wirkt, welche relativ biegesteif ausgebildet sind und somit innerhalb des Stapels eine definierte Vorspannung erzeugen. Die Vorspannung bewirkt, dass die Trennbleche 9, 10 dicht aneinander liegen, d. h. es werden definierte Spaltbreiten zwischen den Trenn- und Deckblechen 7, 8, 9, 10 geschaffen.

Die Presskraft, die zur Erzeugung der Vorspannung auf den Schichtblock aufgebracht wird, ist abhängig von der gepressten Fläche, d. h. die Flächenpressung ist umgekehrt proportional zur gepressten Fläche, Vorteilhaft ist eine Presskraft von 10 KN, welche bei einer relevanten Pressfläche von 72 mm² eine Vorspannung bzw. Flächenpressung von 139 N/mm² ergibt. Der Bereich vorteilhafter Vorspannungen sind Flächenpressungen im Bereich von 10 bis 1500 N/mm², insbesondere im Bereich von 25 bis 700 N/mm². Eine Vorspannung in diesen Bereichen gewährleistet eine optimale Spaltbreite, wobei unter Spaltbreite der Abstand der aufeinander gepressten Flächen zu verstehen ist.

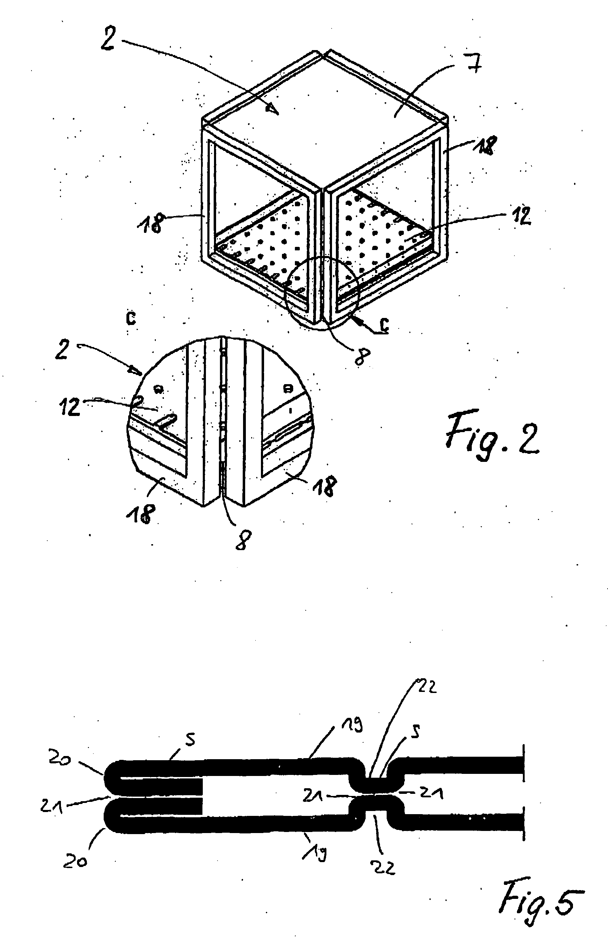

In einem dritten Verfahrensschritt wird diese Vorspannung konserviert bzw. eingefroren; dies geschieht durch Legen von Schweißnähten an den Kanten des Schichtblockes zwischen den Stirnflächen. Eine derartige Schweißnaht ist mit der Bezugsziffer 11 bezeichnet. Vorzugsweise werden auf dem Umfang vier derartige Schweißnähte angebracht, welche die einzelnen Trennplatten überbrücken und zwischen den beiden Deckplatten 7, 8, als Zuganker wirken. Damit wird die zuvor aufgebrachte definierte Vorspannung für die nachfolgenden Verfahrensschritte aufrechterhalten. Alternativ kann die mechanische Fixierung des Schichtblockes und das Einfrieren der Vorspannung auch durch Aufschweißen von Rahmen 18 (vgl. Fig. 2), der Sammelkästen 3, 4, 5, 6 oder zumindest einzelner sich gegenüber liegender Sammelkästen 3 und 5 oder 4 und 6 erfolgen. Die Sammelkasten würden in diesem Falle als verlorene Lötvorrichtung dienen, da sie als Lötvorrichtung nicht wieder verwendbar sind. Nachdem die Vorspannung somit konserviert wurde, wird in einem nachfolgenden Verfahrensschritt das Lot zur Herstellung einer Lotverbindung zwischen den Trennplatten und zwischen den Trennplatten und den Deckplatten sowie zum Dichtlöten der Schweißnähte an den Sammelkästen deponiert. Alternativ kann das Lot vor dem dritten Verfahrensschritt, dem Legen der Schweißnähte aufgebracht werden. Das Deponieren von Lot kann auf verschiedene Weise erfolgen, wobei das Lot in verschiedener Form vorliegt, z. B. als weiche Lotfolie, als flüssige Lotpaste oder als Zweikomponentenlot, bestehend aus Binder und Lotpulver. Eine weiche Lotfolie wird gemäß der Erfindung auf die Stirnseiten des fixierten Schichtblockes gedrückt - das Lot fließt dann von den Stirnseiten in das Innere des Schichtblockes, und zwar durch die Kanäle in die Lotspalte. Das Lot kann auch als chemische Beschichtung aufgebracht werden, und zwar als NiP-, NiCrP- oder NiB-Schicht. Zu diesem Zweck wird der Schichtblock - mit oder ohne Sammelkästen - in eine Beschichtungslösung eingelegt, wobei sich die Lotbeschichtung niederschlägt. Eine Lotbeschichtung der Sammelkästen könnte bei einem späteren Anschweißen von Verbindungsrohren oder Leitungen die Schweißnähte beeinträchtigen. Nachdem das Lot nach dem einen oben beschriebenen Verfahren deponiert wurde, wird der Schichtwärmeübertrager, bestehend aus Schichtblock und Sammelkästen in einen Lötofen verbracht, auf Löttemperatur erhitzt und gelötet. Durch die Lötung entsteht ein innendruckfester Schichtblock mit angeschweißten Sammelkästen, deren Schweißnähte durch den Lötprozess abgedichtet wurden.

**Fig. 2** zeigt ein vorteilhaftes Ausführungsbeispiel, dahingehend, dass zunächst Rahmen 18 auf den Schichtblock 2 aufgeschweißt werden. Die Rahmen 18 sind dabei so ausgeführt, dass kein Kanal des Schichtblockes 2 abgedeckt ist. Der Rahmen 18 sollte auch hoch genug ausgeführt sein, sodass beim Aufdosieren von Lotpaste diese im Rahmen 18 zusammengehalten wird und nicht über den Rahmen fließt. Wenn das Bauteil katalytisch beschichtet werden soll, muss es nach dem Beloten gelötet werden; falls nicht, kann nach Beloten gelötet werden oder wahlweise die Sammelkästen 2, 3, 4, 5, 6 angeschweißt werden.

Die vollständige Verlötung des Schichtblockes ist davon abhängig, dass sämtliche Lotspalte während des Lötprozesses hinreichend mit Lot gefüllt werden. Hierzu ist eine spezielle Konturierung der Trennbleche vorteilhaft.

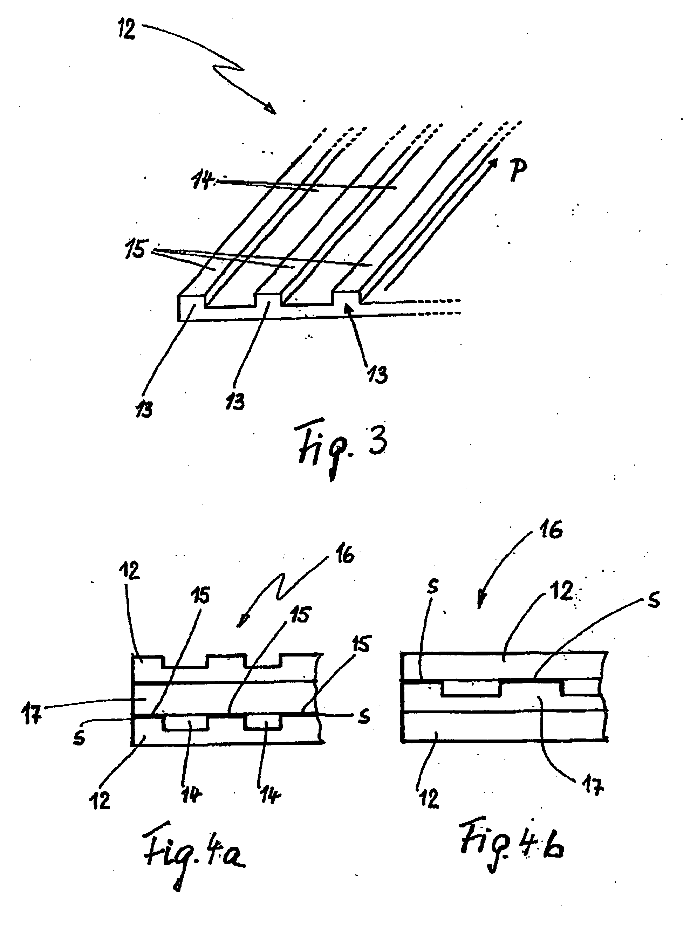

**Fig. 3** zeigt ein vorteilhaftes Ausführungsbeispiel, für ein Trennblech 12, welches den Trennplatten 9, 10 in Fig. 1 entspricht. Das Trennblech 12 ist vorzugsweise aus Edelstahl hergestellt und weist parallel verlaufende, durchgehende Stege 13 auf, zwischen denen durchgehende Strömungskanäle 14 angeordnet sind. Die Stege 13 weisen eine durchgehende Kontaktfläche 15 auf, mit welchen sie an dem nächstfolgenden (hier nicht dargestellten) Trennblech zur Anlage kommen. Die Kontaktflächen 15 bilden somit mit dem benachbarten Trennblech die Lotspalte, welche mit Lot gefüllt werden sollen. Da das Lot - gemäß dem oben beschriebenen erfindungsgemäßen Verfahren - nach mechanischer Fixierung des Schichtblockes von außen aufgebracht wird, muss es in aufgeschmolzenem Zustand die Möglichkeit haben, bis ins Innere des Schichtblockes vorzudringen, wenn eine Verlötung auch im Inneren des Schichtblockes gewünscht ist. Diese Fließrichtung des Lotes ist durch den Pfeil P parallel zu einem Steg 13 dargestellt. Wichtig für den Lottransport ist, dass die Kontaktflächen 15 durchgehend, d. h. möglichst nicht unterbrochen verlaufen, damit sich eine Kapillarwirkung (Sog) einstellt. Die durchgehenden Kontaktflächen 15 sind besonders dann hilfreich, wenn das Lot während der Belotung nicht oder nur unzureichend in das Innere des Schichtblockes verbracht werden kann, trotzdem aber eine Verlötung im Inneren des Schichtblockes gewünscht wird.

**Fig. 4a** und **4b** zeigen Ausschnitte eines mechanisch fixierten Schichtblockes 16 in verschiedenen Stirnansichten, wobei beispielhaft lediglich drei Trennbleche 12, 17, 12 übereinander angeordnet sind. Das Trennblech 12 entspricht dem Typ wie in Fig. 2 dargestellt und beschrieben. Das Trennblech 17 ist vom gleichen Typ, jedoch um 90 Grad gegenüber dem Trennblech 12 um die Hochachse verdreht. Fig. 4a zeigt die Strömungskanäle 14, durch welche Lotpaste ins Innere des Schichtblockes 16 eingedrückt werden kann, und die Lotspalte s, in welchen während des Lötprozesses Lot von außen nach innen fließen kann. Die Lotspalte s werden gebildet durch die Kontaktflächen 15, wo sich die Trennbleche 12 und 17 berühren. Die Lotspalte s, hier durch eine größere Strichstärke dargestellt, sind minimal, d. h. gleich Null, jedoch wegen der Mikrorauhigkeit der Kontaktflächen 15 und der darüber angeordneten Trennplatte 17 partiell größer als Null. Wie bereits eingangs erwähnt, werden die Lotspalte s durch Aufbringung einer definierten Kraft auf den Schichtblock 16, d. h. dessen Deckplatten eingestellt. Die derart minimierten Lotspalte s gewährleisten eine optimale Lötverbindung, die allerdings auch die Auswahl von geeigneten Loten erfordert. Hierfür werden vorzugsweise solche Hochtemperaturlote verwendet, die nur eine geringe isotherme Erstarrung während der schmelzflüssigen Phase aufweisen. Die isotherme Erstarrung erfolgt insbesondere durch Abdiffusion von den Schmelzpunkt erniedrigenden Elementen aus dem Lot in den Grundwerkstoff hinein, aber auch durch Lösung des Grundwerkstoffes in dem schmelzflüssigen Lot. Nur geringe Neigung zur isothermen Erstarrung weisen beispielsweise Hochtemperaturlote auf Cu- und Au-Basis auf, die üblicherweise keine Schmelzpunkt erniedrigenden Stoffe benötigen, da ihre Schmelzpunkte/Schmelzbereiche im Vergleich zum Grundwerkstoff, üblicherweise eine Fe-Werkstoff wie Stahl oder Edelstahl, bereits hinreichend niedrig sind. Vorteilhaft kommen auch Ni-Basislote zum Einsatz. Ni-Basislote enthalten üblicherweise Elemente wie Si, B und P zur Senkung des Schmelzbereiches der Lotlegierung. Relativ stark zur isothermen Erstarrung neigen Ni-Basislote, die B enthalten. B ist ein relativ kleines Element, das schnell in den Grundwerkstoff abdiffundiert. In einem recht schmalen Spalt dringt ein B-haltiges Ni-Lot wie das häufig eingesetzte Ni102 oder das Ni101 oder Ni101A nur eine geringe Tiefe ein, da aufgrund der kleinen Diffusionslängen das B recht schnell in den Grundwerkstoff abdiffundiert und das Lot isotherm erstarrt. Das Element Si, das insbesondere im Ni105 vertreten ist, benötigt hingegen längere Zeit, um in den Grundwerkstoff zu gelangen. Besondere Vorteile haben für das erfindungsgemäße Verfahren Lote, die P enthalten. Die Löslichkeit von P im Fe-haltigen Grundwerkstoff ist sehr niedrig, so dass praktisch keine Abdiffusion stattfindet. Die iostherme Erstarrung erfolgt hier durch Lösung des Grundwerkstoffes im schmelzflüssigen Lot. Trotzdem dringen P-haltige Lote wie Ni106, Ni107 oder auch NiCrSiP-Mischlote wie z. B. NiCr30Si6P4 recht weit in einen Kapillarspalt vor. Letztere Lote sind daher auch vorteilhaft für das erfindungemäße Verfahren, zumal sie auch in Spalte mit einer geringeren Spaltbreite als 0,01 mm eindringen können.

**Fig. 5** zeigt eine für das erfindungsgemäße Verfahren besonders geeignete Variante eines Trennbleches 19. Gemäß DE 100 42 690 A1 der Anmelderin handelt es sich um geprägte und umgeformte Trennplatten 19 mit Falzrand 20 und Noppen 22. Die Lotspalte s, die durch zwei aufeinander liegende Trennbleche 19 gebildet werden, sind in Fig. 5 deutlich und nicht maßstäblich dargestellt. Durch die Rundungen der Falzränder 20 ergibt sich beim Übereinanderlegen der Trennplatten 19 ein Trichter 21, der erstens zur Aufnahme von Lotpaste während der Belotung dient und zweitens eine während des Lotvorganges vorteilhafte geometrische Form mit in Richtung des Lotspaltes s abnehmender Kapillarspaltbreite bildet, die das flüssige Lot bevorzugt in den Lotspalt s zieht. Diese Trichter 21 werden auch im Inneren des Schichtblockes durch die tiefgezogenen Noppen 22 gebildet, die auch entsprechende Rundungen aufweisen.

Die oben verwendeten Abkürzungen für die chemischen Elemente haben folgende bekannte Bedeutungen:
- Au: Gold
- B: Bor
- Cr: Chrom
- Cu: Kupfer
- Fe: Eisen
- Ni: Nickel
- P: Phosphor
- Si: Silizium

## Patentansprüche

1. Verfahren zur Herstellung eines gelöteten und geschweißten Schichtwärmeübertragers (1), bestehend aus einem Trenn- und Deckplatten (7, 8, 9, 10) aufweisenden Schichtblock (2) und an den Schichtblock (1) anschließbaren Sammelkästen (3, 4, 5, 6), **gekennzeichnet durch** folgende, in dieser Abfolge ablaufende Verfahrensschritte:
a) Stapeln der Trenn- und Deckplatten (7, 8, 9, 10) zu einem Schichtblock (2).
b) Aufbringen einer definierten Druckkraft auf entgegengesetzten Seiten (Deckplatten 7, 8) des Schichtblockes (2) und Erzeugen einer definierten Vorspannung im Schichtblock (2),
c) Konservieren der Vorspannung **durch** Legen von Schweißnähten (11) am Schichtblock (2),
d) Deponieren von Lot stirnseitig des Schichtblockes (2) und
e) Löten des Schichtblockes (2).

2. Verfahren nach Anspruch 1, **dadurch gekennzeichnet, dass** die Verfahrensschritte (c) und (d) in ihrer Abfolge vertauscht sind, d. h. das Deponieren von Lot erfolgt vor dem Legen der Schweißnähte.

3. Verfahren nach Anspruch 1 oder 2, **dadurch gekennzeichnet, dass** das Konservieren der Vorspannung durch Aufschweißen der Sammelkästen (3, 4, 5, 6) erfolgt.

4. Verfahren nach Anspruch 1 oder 2, **dadurch gekennzeichnet, dass** zunächst Rahmen (18) aufgeschweißt werden, die die Stirnseiten des Schichtblockes (2) frei zugänglich lassen, dann belotet und abschließend geschweißt und gelötet wird.

5. Verfahren nach Anspruch 1, 2, 3 oder 4, **dadurch gekennzeichnet, dass** durch die Erzeugung der definierten Vorspannung definierte Spaltbreiten zwischen den Trennblechen (9, 10) und zwischen den Trenn- und Deckblechen (7, 9, 8, 10) eingestellt werden.

6. Verfahren nach einem der Ansprüche 1 bis 5, **dadurch gekennzeichnet, dass** die Kraft zur Erzeugung der Vorspannung ca. 10 KN beträgt.

7. Verfahren nach einem der Ansprüche 1 bis 6, **dadurch gekennzeichnet, dass** das Lot in Form einer Lotpaste stirnseitig auf den Schichtblock (2) aufgebracht, vorzugsweise aufgesprüht oder aufdosiert wird.

8. Verfahren nach Anspruch 7, **dadurch gekennzeichnet, dass** die stirnseitig aufgebrachte Lotpaste mittels Druckluft, Ultraschall oder durch Einklopfen in die Kanäle befördert und dort verteilt wird.

9. Verfahren nach Anspruch 8, **dadurch gekennzeichnet, dass** zunächst eine Komponente der Lotpaste, ein flüssiger Binder, und anschließend die andere Komponente, ein trockenes Lotpulver, appliziert werden.

10. Verfahren nach einem der Ansprüche 1 bis 9, **dadurch gekennzeichnet, dass** das Lot in pastöser Form durch den Schichtblock (2) hindurchgepumpt und dass anschließend überschüssiges Lot durch Ausblasen entfernt wird.

11. Verfahren nach einem der Ansprüche 1 bis 10, **dadurch gekennzeichnet, dass** die Lotpaste bzw. der Kleber und/oder das Bauteil, gegebenenfalls auch teilweise, auf eine definierte Temperatur, z. B. 80° Celsius gebracht werden.

12. Verfahren nach einem der Ansprüche 1 bis 6, **dadurch gekennzeichnet, dass** das Lot chemisch als Beschichtung aufgebracht wird, insbesondere als Beschichtung mit Lotlegierungen wie NiP, NiCrP oder NiB.

13. Verfahren nach Anspruch 12, **dadurch gekennzeichnet, dass** das chemische Beschichten durch Einlegen (Tauchen) des Schichtblockes (2) in eine Beschichtungslösung erfolgt.

14. Verfahren nach Anspruch 12, **dadurch gekennzeichnet, dass** die chemische Beschichtung durch Durchpumpen einer Beschichtungslösung durch den Schichtblock (2) erfolgt.

## Claims

1. A method for manufacturing a soldered and welded layer-structured heat exchanger (1) composed of a layered block (2) comprising separating and cover plates (7, 8, 9, 10), and collection, chambers (3, 4, 5, 6) which can be connected to the layered block (1), **characterized by** the following method steps which are performed in this order:
a) Stack the separating and cover plates (7, 8, 9, 10) to form a layered block (2),
b) Apply a defined compressive force to opposite sides (cover plates 7, 8) of the layered block (2) and generate a defined preload in the layered block (2),
c) Maintain the preload by applying welds (11) to the layered block (2),
d) Deposit solder on the front side of the layered block (2) and
e) Solder the layered block (2).

2. The method according to claim 1, **characterized in that** the sequence of method steps (c) and (d) is reversed, i.e. solder is deposited before the welds are applied.

3. The method according to claim 1 or 2, **characterized in that** the preload is maintained by welding the collection chambers (3, 4, 5, 6).

4. The method according to claim 1 or 2, **characterized in that** frames (18) which permit, free access to the front sides of the layered block (2) are welded, and then solder is applied, followed by welding and soldering.

5. The method according to claim 1, 2, 3 or 4, **characterized in that**, by generating the defined preload, defined gap widths are created between the separating plates (9, 10) and between the separating and cover plates (7, 9, 8, 10).

6. The method according to one of the claims 1 to 5, **characterized in that** the force used to generate the preload is approximately 10 KN.

7. The method according to one on the claims 1 to 6, **characterized in that** the solder is applied in the form of a solder paste to the front side of the layered block (2), preferably being sprayed or petered thereon.

8. The method according to claim 7, **characterized in that** the solder paste, which is applied thy front side, is conveyed into the ducts and distributed therein using compressed air, ultrasound, or driving.

9. The method according to claim 8, **characterized in that** a component of the solder paste, a liquid binding agent, is applied first, followed by the other component, a dry solder powder.

10. The method according to one of the claims 1 to 9, **characterized in that** the solder is pumped in paste-like form through the layered block (2), and excess solder is then removed by being blown out.

11. The method according to one of the claims 1 to 10, **characterized in that** the solder paste or adhesive, and/or the component, possibly even in part, are brought to a defined temperature, e.g. 80° Celsius.

12. The method according to one of the claims 1 to 6, **characterized in that** the solder is applied chemically as a coating, in particular as a coating having solder alloys such as NiP, NiCrP or NiB.

13. The method according to claim 12, **characterised in that** the chemical coating takes place by placing (immersing) the layered block (2) into a coating solution.

14. The method according to claim 12, **characterised in that** the chemical coating takes place by pumping a coating solution through the layered block (2).

## Revendications

1. Procédé de fabrication d'un échangeur de chaleur à structure en couches (1), brasé et soudé, se composant d'un bloc multicouche (2) présentant des plaques de séparation et de recouvrement (7, 8, 9 10), et de bacs collecteurs (3, 4, 5, 6) pouvant être ajoutés au bloc multicouche (2),
**caractérisé par** des étapes de procédé se déroulant dans l'ordre qui suit :
a) empilement des plaques de séparation et de recouvrement (7, 8, 9, 10) pour former un bloc multicouche (2),
b) application d'une force de compression définie sur des côtés opposés (plaques de recouvrement 7, 8) du bloc multicouche (2) et production, dans le bloc multicouche (2), d'une précontrainte définie,
c) conservation de la précontrainte par mise en oeuvre de cordons de soudure (11) sur le bloc multicouche (2),
d) dépôt de brasure, frontalement par rapport au bloc multicouche (2), et
e) brasage du bloc multicouche (2).

2. Procédé selon la revendication 1, **caractérisé en ce que** les étapes du procédé (c) et (d) sont interverties dans leur succession, c'est-à-dire que le dépôt de brasure intervient avant la mise en oeuvre des cordons de soudure.

3. Procédé selon la revendication 1 ou 2, **caractérisé en ce que** la conservation de la précontrainte intervient par soudage des bacs collecteurs (3, 4, 5, 6).

4. Procédé selon la revendication 1 ou 2, **caractérisé en ce que** des cadres (18), qui permettent d'accéder librement aux faces frontales du bloc multicouche (2), sont d'abord soudés, puis on procède à l'application de la brasure et, enfin, au soudage est au brasage.

5. Procédé selon la revendication 1, 2, 3 ou 4, **caractérisé en ce que**, grâce à la production de la précontrainte définie, des largeurs d'écartement définies sont ajustées entre les tôles de séparation (9, 10) et entre les tôles de séparation et de recouvrement (7, 9, 8, 10).

6. Procédé selon l'une quelconque des revendications 1 à 5, **caractérisé en ce que** la force pour produire la précontrainte est à peu près égale à 10 KN.

7. Procédé selon l'une quelconque des revendications 1 à 6, **caractérisé en ce que** la brasure, sous la forme d'une pâte à braser, est appliquée frontalement sur le bloc multicouche (2), de préférence par pulvérisation ou bien suivant des quantités dosées.

8. Procédé selon la revendication 7, **caractérisé en ce que** la pâte à braser appliquée frontalement est transportée dans les conduits et y est répartie, en utilisant de l'air comprimé, des ultrasons, ou bien en la faisant pénétrer en tapotant.

9. Procédé selon la revendication 8, **caractérisé en ce que** l'on applique d'abord un composant de la pâte à braser, à savoir un liant liquide est, ensuite, l'autre composant, à savoir une poudre à braser sèche.

10. Procédé selon l'une quelconque des revendications 1 à 9, **caractérisé en ce que** la brasure, sous forme pâteuse, est introduite par pompage à travers le bloc multicouche (2) et **en ce que**, ensuite, la brasure en excédent est éliminée en soufflant.

11. Procédé selon l'une quelconque des revendications 1 à 10, **caractérisé en ce que** la pâte à braser ou la colle et / ou le composant sont placées, le cas échéant également de façon partielle, à une température définie, par exemple de 80° Celsius.

12. Procédé selon l'une quelconque des revendications 1 à 6, **caractérisé en ce que** la brasure est appliquée chimiquement comme revêtement, en particulier comme revêtement avec des alliages de brasage comme le nickel phosphore (NiP), le nickel / chrome / phosphore (NiCrP) ou le nickel / bore (NiB).

13. Procédé selon la revendication 12, **caractérisé en ce que** le processus de revêtement chimique est réalisé par introduction (plongée) du bloc multicouche (2) dans une solution de revêtement.

14. Procédé selon la revendication 12, **caractérisé en ce que** le revêtement chimique est réalisé par pompage d'une solution de revêtement à travers le bloc multicouche (2).
